# EUROPÄISCHE PATENTSCHRIFT

(11) **EP 3 481 186 B1**
(45) Veröffentlichungstag und Bekanntmachung des Hinweises auf die Patenterteilung: **11.03.2020**
(21) Anmeldenummer: 17733486.9
(22) Anmeldetag: 04.07.2017
(51) Int. Cl.: A01M 7/00, B05B 9/08

(54) **INTELLIGENTES SPRÜHSYSTEM**
INTELLIGENT SPRAYING SYSTEM
SYSTÈME DE PULVÉRISATION INTELLIGENT

(30) Priorität: 11.07.2016 US 201662360555 P; 11.07.2016 EP 16178766; 11.07.2016 US 201662360548 P; 11.07.2016 EP 16178764
(43) Veröffentlichungstag der Anmeldung: 15.05.2019
(73) Patentinhaber: Bayer CropScience Aktiengesellschaft, 40789 Monheim am Rhein (DE)
(72) Erfinder: GUTSMANN, Volker, 40764 Langenfeld (DE); REID, Byron, Raleigh, NC 27614 (US); PIENAAR, Chris, Chapel Hill, NC 27514 (US); JARDINE, Peter, Wake Forest, NC 27587 (US); FAGES, Gaelle, Chapel Hill, NC 27516 (US); ZIMMERMANN, Michael, Raleigh, NC 27612 (US)
(74) Vertreter: BIP Patents
(86) Internationale Anmeldenummer: PCT/EP2017/066609
(87) Internationale Veröffentlichungsnummer: WO 2018/011010

(56) Entgegenhaltungen:
- WO-A2-2013/030117
- WO-A2-2013/165684
- DE-A1-102013 109 785
- GB-A- 2 213 031
- US-A- 4 790 454

## Beschreibung

Die vorliegende Erfindung betrifft die Applikation von flüssigen Wirkstoffen. Gegenstand der vorliegenden Erfindung ist ein System und ein Verfahren zur Applikation eines Wirkstoff-Konzentrats aus einer auswechselbaren Kartusche in einer verdünnten Form auf ein Zielobjekt mit Hilfe eines tragbaren Sprühgeräts, wobei wichtige Parameter des Sprühprozesses zwischen Kartusche und/oder dem Sprühgerät und/oder einem externen Computersystem ausgetauscht werden.

Tragbare Sprühgeräte zum Applizieren von Wirkstoffen wie Pestiziden, Insektiziden, Herbiziden und Fungiziden sind bekannt (DE102013109785A1, US2006/0249223A1, US2006/0102245A1, US2006/0261181A1, US2005/0006400A1).

Weit verbreitet sind dabei Sprühgeräte, die als Kompressionssprüher bezeichnet werden. Sie umfassen einen Tank zur Aufnahme der zu versprühenden Flüssigkeit. Eine meist von Hand zu betätigende Luftdruckpumpe, die einen Teil des Tanks bildet, enthält einen üblichen Kolbenstangenaufbau und einen Betätigungshandgriff dafür. Diese Luftdruckpumpe wird verwendet, um über der zu versprühenden Flüssigkeit einen Luftdruck zu erzeugen. Das Unterdrucksetzen des Tanks wird dadurch bewirkt, dass die Bedienperson die Pumpe periodisch betätigt bis ein gewünschter Tankdruck erreicht ist. Die Sprühflüssigkeit tritt aufgrund des Luftdrucks, der auf sie ausgeübt wird, durch ein in die Flüssigkeit im Tank eintauchendes Rohr aus und strömte dann durch einen Schlauch, ein Sprühstrahlventil am äußeren Ende des Schlauches, ein Verlängerungsrohr und schließlich durch eine Sprühdüse hindurch zu dem ausgewählten Zielbereich.

Pestizide, Insektizide, Herbizide und Fungizide werden heute zunehmend in Form von Konzentraten auf den Markt gebracht. Konzentrate haben den Vorteil geringerer Transportkosten. Der Anwender muss den Wirkstoff vor Verwendung verdünnen. Die Verdünnungsvorschiften finden sich gewöhnlich auf der Verpackung oder einem Beipackzettel.

Eine vom Anwender vorgenommene Verdünnung ist jedoch aus folgenden Gründen nachteilig:
Der Anwender kann in unerwünschten Kontakt mit dem Wirkstoff kommen. Es ist denkbar, dass dem Anwender Fehler bei der Berechnung der Mengen an Konzentrat und Verdünnungsmittel unterlaufen. Eine hohe Viskosität des Konzentrats kann zu eine ungenauen volumetrischen Abmessung der erforderlichen Menge führen.

Eine ungenaue Dosierung von Wirkstoffen kann eine Reihe von ungewollten Folgen haben. Die Behandlung des besprühten Objekts kann wirkungslos sein oder es kann zu einer Überdosierung kommen. Es ist denkbar, dass behördliche Vorschiften über abgegebene Mengen nicht eingehalten werden. Es ist denkbar, dass Fehler in der Bestandsüberwachung auftreten, da die abgegebenen Mengen falsch berechnet wurden.

Die Applikation von Wirkstoffen wird in vielen Fällen von einem Dienstleister im Auftrag durchgeführt. Ein Beispiel eines solchen Dienstleisters ist ein Kammerjäger, der bei Auftreten von Schädlingen beauftragt wird, die Schädlinge zu bekämpfen. Für verschiedene Zwecke - unter anderem für den Zweck der Rechnungserstellung oder die Bestandserfassung - ist es wichtig oder gar erforderlich, zu erfassen, welche Person an welchem Ort welchen Wirkstoff in welcher Menge abgeben hat. Bisher erfolgt die Erfassung dieser Informationen unsystematisch und ungenau.

Ferner ist es denkbar, dass bei einer Applikation nicht die gesamte Wirkstoffmenge verbraucht wird. Es verbleibt demnach eine Restmenge an Wirkstoffkonzentrat in der Kartusche. Hier wäre es gut zu wissen, wie große diese Restmenge ist, um beispielsweise entscheiden zu können, ob diese Restmenge für einen nachfolgenden Sprühauftrag ausreichend ist oder nicht.

Ausgehend vom beschriebenen Stand der Technik bestand die Aufgabe darin, die Applikation von Wirkstoffen effizienter und einfacher zu gestalten, den Anwender bei der Applikation zu unterstützen, so dass Fehler bei der Applikation weitestgehend vermieden werden, sowie den Prozess der Applikation besser zu erfassen.

Erfindungsgemäß wird diese Aufgabe durch die Gegenstände der unabhängigen Ansprüche 1, 9 und 14 erfüllt. Bevorzugte Ausführungsformen finden sich in den abhängigen Ansprüchen sowie in der vorliegenden Beschreibung.

Ein erster Gegenstand der vorliegenden Erfindung ist ein Verfahren zur Applikation eines Wirkstoffs umfassend die folgenden Schritte:
- Bereitstellen einer auswechselbaren Kartusche, wobei die Kartusche ein Wirkstoffkonzentrat enthält und eine elektronische Speichereinheit trägt,
- Bereitstellen eines tragbaren Sprühgeräts, das folgende Komponenten umfasst: einen Behälter, Mittel zum Anschließen der Kartusche an das Sprühgerät, eine Kontrolleinheit und eine Sprühdüse,
- Füllen des Behälters mit einem Verdünnungsmittel,
- Anschließen der auswechselbaren Kartusche an das Sprühgerät,
- Applizieren des Wirkstoffs auf ein oder mehrere Zielobjekte durch einen Nutzer, wobei die Flüsse des Wirkstoffkonzentrats und des Verdünnungsmittels mittels Kontrolleinheit so gesteuert werden, dass das Wirkstoffkonzentrat und das Verdünnungsmittel das Sprühgerät als Mischung mit einem gleichbleibenden Mischungsverhältnis über die Sprühdüse verlassen,
- Ermitteln der Menge an appliziertem Wirkstoffkonzentrat mittels der Kontrolleinheit,
- Ermitteln der Menge des in der Kartusche verbleibenden Wirkstoffkonzentrats mittels der Kontrolleinheit,
- Speichern der Menge des in der Kartusche verbleibenden Wirkstoffkonzentrats in der Speichereinheit,
- Übermitteln von Informationen über den applizierten Wirkstoff, und die Menge des applizierten Wirkstoffs an ein externes Computersystem.

Ein weiterer Gegenstand der vorliegenden Erfindung ist ein System, umfassend
- ein tragbares Sprühgerät, das folgende Komponenten umfasst:
   - einen Behälter zur Aufnahme eines Verdünnungsmittels,
   - eine Sprühdüse,
   - Mittel zur Förderung des Verdünnungsmittels in Richtung Sprühdüse,
   - Mittel zum reversiblen Anschließen einer austauschbaren Kartusche enthaltend ein Wirkstoffkonzentrat an das Sprühgerät,
   - Mittel zur Förderung des Wirkstoffkonzentrats in Richtung Sprühdüse, und
   - eine Kontrolleinheit,
- eine auswechselbare Kartusche, die Mittel zum reversiblen Anschluss der Kartusche an das Sprühgerät, das Wirkstoffkonzentrat und eine elektronische Speichereinheit umfasst, und
- ein externes Computersystem,
wobei das System so konfiguriert ist, dass es die während eines Sprühvorgangs applizierte Menge an Wirkstoffkonzentrat ermittelt, die nach dem Sprühvorgang in der Kartusche verbliebene Menge an Wirkstoffkonzentrat ermittelt und in der elektronischen Speichereinheit speichert, und Informationen über einen erfolgten Sprühvorgang an das externe Computersystem übermittelt.

Ein weiterer Gegenstand der vorliegenden Erfindung ist ein Computerprogrammprodukt umfassend einen Datenträger, auf dem ein Computerprogramm gespeichert ist, das in den Arbeitsspeicher eines Computersystems geladen werden kann und dort das Computersystem dazu veranlasst, folgende Schritte ausführen:
- Empfangen eines Mischungsverhältnisses,
- Ansteuern von Fördermitteln zum Fördern eines Verdünnungsmittels aus einem Behälter in Richtung einer Sprühdüse und zum Fördern des Wirkstoffkonzentrats aus der Kartusche in Richtung der Sprühdüse,
- Regeln des Flusses des Verdünnungsmittels und/oder des Wirkstoffkonzentrats, so dass Verdünnungsmittel und Wirkstoffkonzentrat als Mischung mit dem empfangenen Mischungsverhältnis durch die Sprühdüse treten,
- Ermitteln der Menge an Wirkstoffkonzentrat, das durch die Sprühdüse befördert wird,
- Ermitteln der Menge an Wirkstoffkonzentrat, die in der Kartusche verbleibt,
- Speichern der Menge an Wirkstoffkonzentrat, die in der Kartusche verbleibt, in der elektronischen Speichereinheit der Kartusche,
- Übermitteln der Menge an appliziertem Wirkstoffkonzentrat an ein externes Computersystem.

Gemäß der vorliegenden Erfindung liegen Wirkstoffkonzentrat und Verdünnungsmittel in separaten Behältnissen vor. Der Anwender muss die Verdünnung des Wirkstoffkonzentrats jedoch nicht selbst manuell vornehmen sondern die Mischung erfolgt automatisch während des Sprühvorgangs. In einer bevorzugten Ausführungsform muss sich der Anwender nicht einmal darum kümmern, in welchem Verhältnis das Wirkstoffkonzentrat und das Verdünnungsmittel gemischt werden müssen; das korrekte Mischungsverhältnis wird durch eine Kontrolleinheit eingestellt, die so konfiguriert ist, dass sie Informationen zum einzustellenden Mischungsverhältnis aus einer Speichereinheit der Konzentrat-Kartusche auslesen kann.

Zudem wird die Menge an appliziertem Wirkstoff automatisch erfasst und an ein externes Computersystem übermittelt. Da die Daten automatisch erfasst werden, können sie direkt zur Bestandskontrolle und/oder zur Rechnungsstellung und/oder weitere Zwecke verwendet werden. Fehler durch manuelle Falscheingaben werden vermieden.

Die nach einem Sprühprozess in der Kartusche verbliebene Restmenge an Wirkstoffkonzentrat wird ebenfalls ermittelt und in eine Speichereinheit an der Kartusche gespeichert. Durch Auslesen der Speichereinheit kann so ermittelt werden, welche Restmenge an Wirkstoffkonzentrat noch in der Kartusche vorhanden ist; unabhängig davon, ob sich die Kartusche noch an dem Sprühgerät befindet oder nach einem Sprühvorgang vom Sprühgerät entfernt und beispielsweise in ein Lager gestellt worden ist.

Die einzelnen Elemente, die das erfindungsgemäße System und das Verfahren kennzeichnen, werden nachfolgend näher erläutert. Bei dieser Erläuterung wird nicht zwischen den einzelnen Erfindungsgegenständen (System, Verfahren, Computerprogrammprodukt) unterschieden. Stattdessen gelten die nachfolgenden Beschreibungen für alle Erfindungsgegenstände in analoger Weise, unabhängig davon, in welchem Kontext sie stehen.

Eine Komponente der vorliegenden Erfindung ist ein tragbares Sprühgerät. Unter tragbar wird verstanden, dass das Gerät von einem Menschen ohne maschinelle Hilfsmittel von einem Ort zu einem anderen Ort transportiert werden kann.

Vorzugsweise ist das Sprühgerät so ausgeführt, dass der Benutzer einen Teil des Sprühgeräts, der den Behälter mit dem Verdünnungsmittel umfasst, auf dem Rücken tragen und transportieren kann (Rucksack-Gerät). Ein anderer Teil, der die Sprühdüse umfasst, kann mit einer Hand getragen werden. Zum Tragen des Behälters auf dem Rücken ist er vorzugsweise mit entsprechenden Gurten ausgestattet.

Das Sprühgerät umfasst einen Behälter zur Aufnahme eines Verdünnungsmittels. Das Verdünnungsmittel wird verwendet, um es mit dem Konzentrat zu mischen und damit eine Verdünnung des Konzentrats zu erzielen.

Das Verdünnungsmittel ist, so wie das Konzentrat auch, eine Flüssigkeit. Der Begriff "Flüssigkeit" soll hier auch Lösungen, Emulsionen und Suspensionen erfassen.

In einer bevorzugten Ausführungsform handelt es sich bei dem Verdünnungsmittel um Wasser.

Beim Konzentrat handelt es sich vorzugsweise um ein Wirkstoffkonzentrat. Unter Wirkstoffkonzentrat wird eine Formulierung eines Wirkstoffs verstanden, die in konzentrierter Form vorliegt und vor ihrer Verwendung verdünnt werden muss/sollte. Ein Wirkstoff ist eine Substanz oder ein Substanzgemisch, das eine biologische Wirkung aufweist. Beispiele für Wirkstoffe sind Pestizide, Insektizide, Herbizide und Fungizide. In einer besonders bevorzugten Ausführungsform handelt es sich bei dem Konzentrat um ein Pestizid-Konzentrat. Vorzugsweise handelt es sich bei dem Pestizid um ein Mittel zur Bekämpfung tierischer Schädlinge, noch mehr bevorzugt um ein Akarizid (gegen Milben/Spinnentiere), ein Insektizid (gegen Schadinsekten) oder ein Rodentizid (gegen Nagetiere).

Der Behälter zur Aufnahme des Verdünnungsmittels kann aus einem beliebigen Material bestehen, das mit dem Verdünnungsmittel kompatibel ist. Der Begriff "kompatibel" bedeutet, dass das Material durch das Verdünnungsmittel nicht chemisch angegriffen werden sollte und dass das Material für das Verdünnungsmittel undurchlässig sein sollte.

Der Behälter kann als Tank ausgeführt sein, der einem Überdruck standhält. Der Überdruck kann eingesetzt werden, um das Verdünnungsmittel aus dem Tank in Richtung Auslass zu befördern.

In einer bevorzugten Ausführungsform wird der Behälter drucklos betrieben. Dadurch, dass der Behälter keinem Überdruck standhalten muss, kann er aus dünnwandigerem und leichterem Material gefertigt werden.

In einer ganz besonders bevorzugten Ausführungsform ist der Behälter als flexibler Beutel ausgeführt. Ein solcher Beutel weist vorzugsweise Gurte auf, damit er wie ein Rucksack auf den Rücken geschnallt und getragen werden kann.

Das erfindungsgemäße Sprühgerät weist ferner Mittel auf, um das Verdünnungsmittel aus dem Behälter in Richtung Sprühdüse zu befördern. Wie bereits beschrieben, kann das Verdünnungsmittel mittels Druck aus dem Behälter in Richtung Sprühdüse befördert werden. Dieser Druck kann beispielsweise mit einer manuell oder elektrisch betriebenen Luftpumpe oder mit einer Druckpatrone erzeugt werden.

Vorzugsweise wird das Verdünnungsmittel mit einer elektrisch betriebenen Pumpe in Richtung Sprühdüse befördert.

Das erfindungsgemäße Sprühgerät umfasst eine Sprühdüse. Über die Sprühdüse kann eine gewünschte räumliche Verteilung der applizierten Mischung erreicht werden. Üblicherweise verwandelt die Sprühdüse die Flüssigkeit, die durch sie hindurchtritt, in Tropfen mit einer spezifischen Tropfengrößenverteilung, die unter anderem vom Druck der Flüssigkeit, von der Fließgeschwindigkeit der Flüssigkeit und der Geometrie der Sprühdüse abhängt.

Vorzugsweise ist die Sprühdüse austauschbar, so dass ein Anwender eine an die Applikation und das Zielobjekt angepasste Sprühdüse mit einer gewünschten Tropfengrößenverteilung und räumlichen Verteilung des Sprühguts auswählen kann.

Die Sprühdüse kann beispielsweise lanzenförmig oder pistolenförmig sein oder eine andere Form aufweisen. Vorzugsweise ist sie so ausgeführt, dass sie vom Benutzer mit einer Hand gehalten und auf das Zielobjekt gerichtet werden kann.

Üblicherweise weist die Sprühdüse einen Handgriff auf, der vom Nutzer betätigt wird, um einen Sprühvorgang zu starten. Üblicherweise wird durch Betätigen des Handgriffs ein Ventil geöffnet, so dass Wirkstoffkonzentrat und Verdünnungsmittel aus ihren jeweiligen Behältern in Richtung Sprühdüse und durch die Sprühdüse auf das Zielobjekt gefördert werden.

In einer bevorzugten Ausführungsform weisen auswechselbare Sprühdüse und die Kontrolleinheit Mittel auf, die es der Kontrolleinheit ermöglichen, die Anwesenheit einer Sprühdüse und/oder die Art der anwesenden Sprühdüse zu erkennen. Es ist zum Beispiel denkbar, dass die Kontrolleinheit nur dann die Förderung der Flüssigkeiten aus ihren Behältern in Richtung Sprühdüse einleitet, wenn auch eine Sprühdüse angeschlossen ist. Ist keine Sprühdüse angeschlossen, erfolgt aus z.B. Sicherheitsgründen keine Förderung. Weiterhin ist denkbar, dass die Kontrolleinheit die Parameter zur Förderung der Flüssigkeiten an die Art der vorhandenen Sprühdüse anpasst, um ein optimales Sprühergebnis zu ermöglichen. Es ist denkbar, dass eine Sprühdüse einen Mindestdruck der ankommenden Flüssigkeit benötigt, um eine gewünschte räumliche Verteilung der Sprühflüssigkeit zu erzeugen. Dieser Mindestdruck könnte an der Sprühdüse in einer Weise kodiert sein, die von der Kontrolleinheit gelesen werden kann, so dass der Benutzer derartige Parameter nicht manuell einstellen muss.

Vor der Sprühdüse baut sich üblicherweise ein Druck auf. Es ist denkbar, dass dieser Druck in einem definierten Bereich liegen muss, um ein optimales Sprühergebnis zu erzielen.

In einer bevorzugten Ausführungsform ist vor der Sprühdüse ein Drucksensor angebracht, der mit der Kontrolleinheit verbunden ist. Mittels des Drucksensors regelt die Kontrolleinheit den Fluss von Verdünnungsmittel und/oder Konzentrat so, dass sich der Druck stets in einem definierten Bereich bewegt.

Vorzugsweise ist vor dem Auslass ein Ventil angebracht. Dieses Ventil kann manuell oder automatisch geöffnet und geschlossen werden.

Vorzugsweise kann dieses Ventil manuell betätigt werden, so dass der Benutzer die am Auslass angebrachte Sprühdüse auf ein Zielobjekt richten und durch manuelles Öffnen des Ventils den Sprühvorgang starten kann.

Denkbar ist auch, dass das Ventil automatisch geöffnet wird. Denkbar ist zum Beispiel, dass das Sprühgerät über einen Sensor verfügt, der die Lage der Sprühdüse im Raum erkennt und bei einer bestimmten Lage das Ventil automatisch öffnet oder schließt. Denkbar ist zum Beispiel, dass das Ventil geschlossen ist, wenn die Sprühdüse zum Boden gerichtet ist und geöffnet wird, wenn die Sprühdüse in die Waagerechte gehoben wird.

Denkbar ist auch, dass das Ventil automatisch geöffnet wird, wenn sich die Sprühdüse dem Zielobjekt nähert. Dies kann beispielsweise mittels Sensoren oder GPS-gestützt erfolgen.

Das erfindungsgemäße Sprühgerät umfasst ferner Mittel zum reversiblen Anschluss einer austauschbaren Kartusche an das Sprühgerät. Die Kartusche dient der Aufnahme des Konzentrats. Kartusche und Sprühgerät weisen zueinander kompatible Mittel zum Anschließen der Kartusche an das Sprühgerät auf. Ist die Kartusche an das Sprühgerät angeschlossen, so kann das in der Kartusche enthaltene Konzentrat aus der Kartusche durch Teile des Sprühgeräts in Richtung Sprühdüse des Sprühgeräts befördert werden.

Der Anschluss der Kartusche an das Sprühgerät kann beispielsweise über eine Schraub- oder eine Bajonettverbindung erfolgen.

Die Kartusche ist austauschbar, das heißt, sie kann an das Sprühgerät angeschlossen und wieder entfernt werden.
Sie wird vorzugsweise dann wieder entfernt und ggf. durch eine andere (z.B. neue) Kartusche ersetzt, wenn sie entleert worden ist.

Die Kartusche ist so ausgeführt, dass sie für das Konzentrat undurchlässig ist und durch das Konzentrat nicht chemisch angegriffen wird.

In einer bevorzugten Ausführungsform ist die Kartusche zumindest teilweise aus Kunststoff ausgeführt. Kunststoffe sind dafür bekannt, dass sie vielen Stoffen gegenüber chemisch inert sind. Sie sind zudem leicht, lassen sich gut verarbeiten und in nahezu beliebige Formen bringen.

In einer bevorzugten Ausführungsform ist die Kartusche als Druckbehälter ausgeführt. Vorzugsweise enthält sie neben dem Konzentrat ein von dem Konzentrat getrenntes, unter Druck stehendes Treibmittel. Die Kartusche weist vorzugsweise ein Ventil auf. Vorzugsweise wird das Ventil automatisch geöffnet, wenn die Kartusche an das Sprühgerät angeschlossen wird. Das unter Druck stehende Treibmittel drückt das Konzentrat aus der Kartusche in das Sprühgerät. Ein weiteres, in dem Sprühgerät befindliches Ventil stoppt den weiteren Fluss des Konzentrats. Dieses weitere Ventil öffnet sich vorzugsweise dann, wenn ein Nutzer einen Applikationsvorgang, üblicherweise durch Betätigen eines Handgriffs, startet.

Die vorzugsweise als Druckbehälter ausgeführte Kartusche kann beispielsweise aus Aluminium oder Weißblech bestehen - Materialien, die druckbeständig sind und beispielsweise in Spraydosen (z.B. Rasierschaum) verwendet werden.

Es ist denkbar, dass die Kartusche einen Beutel mit dem Konzentrat enthält, wobei der Beutel mit dem Ventil verbunden ist (Ventilbeutelsystem). Das Treibmittel umgibt den mit dem Konzentrat befüllten Beutel und übt den notwendigen Druck für das Herausdrücken des Konzentrats aus der Kartusche aus (siehe z.B. DE69820260T2, US5505039, EP0718213A).

Denkbar ist aber auch, dass Treibmittel und das Konzentrat durch einen Kolben voneinander getrennt sind (siehe z.B. DE3934237A1). Das Treibmittel übt einen Druck auf den Kolben auf. Ist das Ventil geöffnet, wird das Konzentrat durch den Kolben aus der Kartusche gedrückt. Denkbar ist beispielsweise die Verwendung eines ZIMA-Kolbens.

Die Kartusche kann als Einwegbehälter oder Mehrwegbehälter ausgeführt sein.

Die Kartusche weist eine elektronische Speichereinheit auf.

Unter der elektronischen Speicherung sind alle Speichermedien zusammengefasst, die Informationen in oder auf Basis von elektronischen (Halbleiter-)Bauelementen speichern. Als Beispiele seien genannt: ROM (read only memory), PROM (programmable read only memory), EPROM (erasable programmable read only memory), EEPROM (electrically erasable programmable read only memory), Flash-EEPROM (z. B. USB-Speichersticks), FRAM (ferroelectric random access memory), MRAM (Magnetoresistive random access memory) und Phase-change RAM (phase-change random access memory). Vorzugsweise handelt es sich bei der elektronischen Speichereinheit um eine Speichereinheit, in die reversibel Informationen gespeichert und wieder gelöscht werden können; z.B. Informationen über die Restmenge an Wirkstoffkonzentrat, das sich nach einem Sprühvorgang noch in der Kartusche befindet.

In der Speichereinheit ist ein Verdünnungsgrad oder es sind Informationen zum Verdünnungsgrad gespeichert. Es können auch mehrere Verdünnungsgrade oder Informationen zu mehreren Verdünnungsgraden gespeichert sein. Ein solcher Verdünnungsgrad gibt an, in welchem Verhältnis das Konzentrat und ein Verdünnungsmittel (meistens Wasser) miteinander vermischt werden sollen, um eine gewünschte Wirkung zu erzielen. Neben dem Begriff Verdünnungsgrad wird in dieser Beschreibung auch der Begriff Mischungsverhältnis verwendet. Die Begriffe sind als synonym zu betrachten.

Das Sprühgerät weist eine Kontrolleinheit auf. Die Kontrolleinheit ist in der Lage, Informationen aus der Speichereinheit der Kartusche auszulesen. Die Mittel zum Auslesen der Speichereinheit und die Speichereinheit selbst sind entsprechend aufeinander abgestimmt. Es gibt vielfältige Möglichkeiten diese Kommunikation zwischen Kontrolleinheit und Speichereinheit zu realisieren. Einige dieser Möglichkeiten sind nachfolgend beschrieben.

Eine Möglichkeit des Auslesens besteht beispielsweise darin, die Kartusche mit einem RFID-Tag zu versehen. Ein RFID-Tag weist eine Speichereinheit auf. Die Kontrolleinheit verfügt dementsprechend über Mittel, die Speichereinheit in dem RFID-Tag auszulesen.

In diesem Fall erfolgt das Auslesen kontaktlos. Neben der genannten Kommunikationsform sind auch andere kontaktlose Kommunikationsarten zwischen Speichereinheit und Kontrolleinheit denkbar wie Bluetooth oder Nahfeld-Kommunikation.

Die Kommunikation kann aber auch kontaktbehaftet erfolgen. Es ist beispielsweise denkbar, dass sowohl die Kartusche als auch das Sprühgerät über elektrische oder optische Kontakte verfügen, die beim Anschluss der Kartusche an das Sprühgerät einen elektrischen oder optischen Kontakt zwischen Kartusche und Sprühgerät herstellen, über den die Kontrolleinheit auf die Speichereinheit zugreifen kann.

Neben einem einzustellenden Verdünnungsgrad können weitere Informationen in der Speichereinheit der Kartusche gespeichert sein, wie beispielsweise Art des Wirkstoffs, Chargen-Nummer, Haltbarkeitsdatum und Ähnliches.

Der einzustellende Verdünnungsgrad kann direkt in der Speichereinheit der Kartusche abgelegt sein. Es ist auch denkbar, dass in der Speichereinheit der Kartusche eine Kennung (Zeichenkette, Identifikationsnummer oder Ähnliches) hinterlegt ist, anhand der die Kontrolleinheit die Kartusche und/oder das in der Kartusche enthaltene Konzentrat eindeutig identifizieren kann. Es ist denkbar, dass die Kontrolleinheit über ein Register verfügt, in dem Informationen über eine Reihe von Konzentraten gespeichert sind, u.a. der einzustellende Verdünnungsgrad für jedes Konzentrat. Wenn die Kontrolleinheit die Kennung aus der Speichereinheit ausliest, kann sie das Konzentrat eindeutig zuordnen und den dazugehörigen Verdünnungsgrad ermitteln. In diesem Fall ist der Verdünnungsgrad nicht direkt in der Speichereinheit der Kartusche hinterlegt sondern es ist eine Information hinterlegt, anhand der der Verdünnungsgrad ermittelt werden kann. Da es auf dasselbe Ergebnis hinausläuft (der Verdünnungsgrad ist von der Kontrolleinheit anhand von Informationen, die durch die Speichereinheit der Kartusche bereitgestellt worden sind, ermittelt worden), ist diese Ausführungsform, bei der der Verdünnungsgrad anhand einer Information in der Speichereinheit der Kartusche von der Kontrolleinheit ermittelt wird, als äquivalent zu derjenigen Ausführungsform zu betrachten, bei der der Verdünnungsgrad in der Speichereinheit der Kartusche direkt gespeichert ist.

Das erfindungsgemäße Sprühgerät verfügt über Mittel zur Förderung des Konzentrats aus der Kartusche in Richtung Auslass. Vorzugsweise handelt es sich hierbei um eine elektrisch betriebene Pumpe. In einer besonders bevorzugten Ausführungsform wird eine Schrittmotor-Dosierpumpe verwendet (siehe z.B.: DE102004047584, WO2012048976, DE102009006203). Durch den Schrittmotorantrieb können auch kleine Mengen des Konzentrats dem Verdünnungsmittel beigemengt werden.

Die Kontrolleinheit ermittelt den erforderlichen oder gewünschten Verdünnungsgrad und regelt den Fluss des Verdünnungsmittels und/oder des Konzentrats entsprechend. Auch hierbei sind verschiedene Varianten denkbar; einige davon sind nachfolgend beschrieben.

Es ist zum Beispiel denkbar, dass das Verdünnungsmittel aus dem Behälter in Richtung Auslass gefördert wird und mittels eines Durchflussmessers der Fluss ermittelt wird. Der Durchflussmesser kann mit der Kontrolleinheit verbunden sein und anhand des Flusses des Verdünnungsmittels in Richtung Auslass den Fluss des Konzentrats so regeln, dass sich ein konstantes Mischungsverhältnis zwischen Konzentrat und Verdünnungsmittel einstellt. Während also Verdünnungsmittel fließt, wird der Fluss gemessen und genau so viel Konzentrat dem Verdünnungsmittel zugeführt, dass sich eine Mischung mit dem gewünschten/erforderlichen Mischungsverhältnis (Verdünnungsgrad) ergibt.

Denkbar ist natürlich auch die umgekehrte Variante: das Konzentrat wird in Richtung Auslass gefördert, der Fluss wird gemessen und es wird genau so viel Verdünnungsmittel dem Konzentrat zugeführt, dass sich der gewünschte/erforderliche Verdünnungsrad einstellt.

Denkbar ist auch, dass die Flüsse von Verdünnungsmittel und Konzentrat durch Regelungen aufeinander abgestimmt werden, um den gewünschten/erforderlichen Verdünnungsgrad zu erzielen. In einem solchen Fall werden beide Flüsse mittels entsprechender Sensoren erfasst.

In einer bevorzugten Ausführungsform wird das Verdünnungsmittel mit einer ersten elektrischen Pumpe aus dem Behälter in Richtung Sprühdüse gefördert. Der Fluss des Verdünnungsmittels wird mit einem Durchflussmesser erfasst und an die Kontrolleinheit übermittelt. Die Kontrolleinheit ist mit einer zweiten elektrischen Pumpe verbunden und regelt den Fluss des Konzentrats in Richtung Sprühdüse so, dass Konzentrat und Verdünnungsmittel als Mischung mit dem gewünschten/erforderlichen Mischungsverhältnis das Sprühgerät über die Sprühdüse verlassen.

Mit einem Durchflussmesser wird die pro Zeiteinheit in Richtung Sprühdüse fließende Flüssigkeitsmenge erfasst. Unter Flüssigkeitsmenge wird je nach verwendetem Messverfahren das Volumen oder die Masse verstanden.

Der Durchflussmesser ist vorzugsweise einer, der üblicherweise in geschlossenen Rohrleitungen eingesetzt wird, wie beispielsweise ein magnetisch-induktiver Durchflussmesser, ein Schwebekörper-Durchflussmesser, ein Ultraschall-Durchflussmesser, ein Coriolis-Massendurchflussmesser, ein kalorimetrischer Durchflussmesser oder ein Vortex-Durchflussmesser. Denkbar ist aber auch die Verwendung einer Messblende oder eine Staudrucksonde.

In einer bevorzugten Ausführungsform wird die Durchflussmessung mit Hilfe eines Differenzdrucksensors vorgenommen.

In einer weiteren bevorzugten Ausführungsform wird ein Flügelradsensor zur Durchflussmessung eingesetzt. Das Messprinzip beruht darauf, dass ein Flügelrad eine Drehzahl proportional zur Strömungsgeschwindigkeit eines Fluids annimmt, durch das das Flügelrad angetrieben wird. Zur Messung der Drehzahl kann ein Permanentmagnet an das Flügelrad angebracht werden, der sich mit dem Flügelrad mitbewegt. Ein Hall-Sensor, an dem sich der Permanentmagnet vorbeibewegt, kann als Impulszähler verwendet werden. Die pro Zeiteinheit gemessene Anzahl von Impulsen ist proportional zur Drehzahl des Flügelrads und damit zur Strömungsgeschwindigkeit des Fluids.

Details zur Durchflussmessung können beispielsweise dem folgenden Lehrbuch entnommen werden: K.W. Bonfig: Technische Durchflussmessung, Vulkan-Verlag Essen, 3. Auflage, 2002, ISBN 3-8027-2190-X.

Über die Sprühdüse verlassen Wirkstoffkonzentrat und Verdünnungsmittel als Mischung das Sprühgerät.

Es ist denkbar, dass Verdünnungsmittel und Konzentrat unmittelbar vor der Sprühdüse in einer entsprechenden Zuleitung zusammengeführt werden. Ebenso ist es aber auch denkbar, dass vor der Sprühdüse eine Mischkammer existiert, in welche Verdünnungsmittel und Konzentrat über zwei separate Zuleitungen eingebracht werden. In der Mischkammer kommt es dann zu einer Durchmischung von Verdünnungsmittel und Konzentrat bevor die Mischung dann über die Sprühdüse das Sprühgerät verlässt.

Die Durchmischung von Verdünnungsmittel und Konzentrat kann durch geeignete Maßnahmen gefördert werden, beispielsweise durch statische Mischelemente.

Erfindungsgemäß wird die Menge an appliziertem Wirkstoff erfasst. In einer bevorzugten Ausführungsform steuert die Kontrolleinheit die Pumpe zur Förderung des Konzentrats aus der Kartusche in Richtung Sprühdüse, um den gewünschten/erforderlichen Verdünnungsgrad einzustellen. Daher "weiß" die Kontrolleinheit auch, wieviel WirkstoffKonzentrat gefördert worden ist. Vernachlässigt man Restmengen, die in den Leitungen des Sprühgeräts zurückbleiben, so entspricht die geförderte Menge der applizierten Menge.

Diese Menge wird registriert und in einer Speichereinheit der Kontrolleinheit gespeichert.

In einer bevorzugten Ausführungsform wird die Menge an appliziertem Wirkstoff (zusätzlich oder ausschließlich) oder die daraus abgeleitete Restmenge an WirkstoffKonzentrat in der Speichereinheit der Kartusche gespeichert. Eine Kartusche enthält üblicherweise, wenn sie noch nicht gebraucht worden ist, eine genau definierte Menge an Konzentrat. Wird die Menge an aus der Kartusche in Richtung Sprühdüse gefördertem Konzentrat erfasst, ergibt sich die Restmenge als Differenz aus Ursprungsmenge und geförderter Menge. Wird diese Restmenge oder die geförderte Menge in die Speichereinheit der Kartusche zurückgeschrieben, lässt sich sehr einfach ermitteln, wieviel Wirkstoff in einer schon gebrauchten Kartusche noch enthalten ist.

Damit kann während des Sprühvorgangs stets überwacht werden, wieviel Wirkstoffmenge noch vorhanden ist. Der Nutzer kann anhand der Restmenge erkennen, ob die vorhandene Menge ausreichend ist, eine Sprühaufgabe zu erledigen.

Da die Kartusche auswechselbar ist, ist es denkbar, dass der Nutzer nach einer Sprühaufgabe eine noch nicht vollständig entleerte Kartusche von dem Sprühgerät entfernt und sie für eine nachfolgende spätere Sprühaufgabe in ein Lager legt. Zu einem späteren Zeitpunkt kann der Nutzer dann durch einfaches Auslesen der Speichereinheit ermitteln, ob die Restmenge für die vorliegende Sprühaufgabe ausreichend ist.

Das erfindungsgemäße System umfasst ferner ein externes Computersystem. Unter dem Begriff "extern" wird verstanden, dass das Computersystem üblicherweise nicht mit dem Sprühgerät mitgeführt wird sondern sich in der Regel an einem anderen Ort befindet, als der Ort, an dem das Sprühgerät zum Einsatz kommt. Das externe Computersystem ist üblicherweise ein stationäres System: während das Sprühgerät an verschiedenen Orten zum Einsatz kommt, verbleibt das externe Computersystem stets an demselben Ort.

In einer bevorzugten Ausführungsform umfasst das erfindungsgemäße System ferner ein mobiles Computersystem. Im Gegensatz zum externen Computersystem wird das mobile Computersystem mit dem Sprühgerät mitgeführt. In einer bevorzugten Ausführungsform kann das Sprühgerät über das mobile Computersystem bedient werden. Es ist denkbar, dass man das mobile Computersystem zur Bedienung des Sprühgeräts mit dem Sprühgerät über ein Kabel verbindet (z.B. über eine USB-Schnittstelle). Es ist aber auch denkbar, dass das mobile Computersystem über eine kontaktlose Schnittstelle mit dem Sprühgerät kommunizieren kann (Fernbedienung). Es ist denkbar, dass die Kommunikation über Infrarot, Ultraschall, Bluetooth oder Ähnlichem erfolgt.

Mittels des mobilen Computersystem kann der Nutzer beispielsweise erkennen, ob die Kartusche von dem Sprühgerät erkannt worden ist, welche (Rest-)Menge an Konzentrat noch in der Kartusche enthalten ist, welche Druck vor der Sprühdüse eingestellt ist und vieles mehr.

Mittels des mobilen Computersystems kann der Nutzer Daten des Sprühgerätes einsehen und Daten und Steuerbefehle eingeben.

Der Nutzer kann z.B. den Druck vor der Sprühdüse einstellen, um das Sprühprofil zu variieren.

Der Nutzer kann z.B. den Transfer von Informationen über einen Sprühvorgang zum externen Computersystem mittels des mobilen Computersystems einleiten.

In einer bevorzugten Ausführung ist das mobile Computersystem ein Mobiltelefon (Smartphone) mit einem entsprechenden Softwareprogramm (z.B. in Form einer so genannten "App").

Nach oder während eines Sprühprozesses werden Informationen zum Sprühprozess auf ein externes Computersystem übertragen, um den Sprühprozess für nachfolgende Zwecke zu erfassen.

Dabei werden zumindest der verwendete Wirkstoff und die applizierte Wirkstoffmenge übertragen. Darüber hinaus können auch noch Informationen zum Nutzer des Sprühgeräts (wer hat die Applikation vorgenommen), zum Applikationsort (bei wem wurde welches Objekt besprüht), zur Applikationszeit (wie lange hat die Applikation gedauert, wann wurde sie vorgenommen (Tag, Uhrzeit)) und weitere Informationen an ein externes Computersystem übertragen werden.

Diese Übertragung kann beispielsweise durch mobile Kommunikationsmittel (z.B. GSM = Global System for Mobile communication) erfolgen. Auch eine Kommunikation über WLAN ist denkbar.

Die Übermittlung der Informationen an das externe Computersystem kann von verschiedenen Vorrichtungen erfolgen. Es ist zum Beispiel denkbar, dass die Kontrolleinheit des Sprühgeräts eine Verbindung mit dem externen Computersystem herstellt, um die Informationen zu übertragen. Vorzugsweise wird eine Verbindung zwischen dem mobilen Computersystem und dem externen Computersystem hergestellt, um die Informationen zu übermitteln.

Das bedeutet, dass Informationen über einen Sprühvorgang zunächst von der Kontrolleinheit über einen Kommunikationskanal mit einer kurzen Reichweite (z.B. Bluetooth) an das mobile Computersystem übermittelt werden und dann später Informationen von dem mobilen Computersystem über einen Kommunikationskanal mit langer Reichweite (z.B. GSM) an das externe Computersystem übermittelt werden.

Denkbar ist aber auch, dass die Kontrolleinheit des Sprühgerät und/oder das mobile Computersystem über eine stationäre Daten-Verbindung (z.B. über USB = Universal Serial Bus) mit dem externen Computersystem verbunden wird, um die Informationen zu übertragen.

Die Erfindung wird nachfolgend anhand von Ausführungsbeispielen näher erläutert, ohne die Erfindung jedoch auf diese Beispiele beschränken zu wollen.

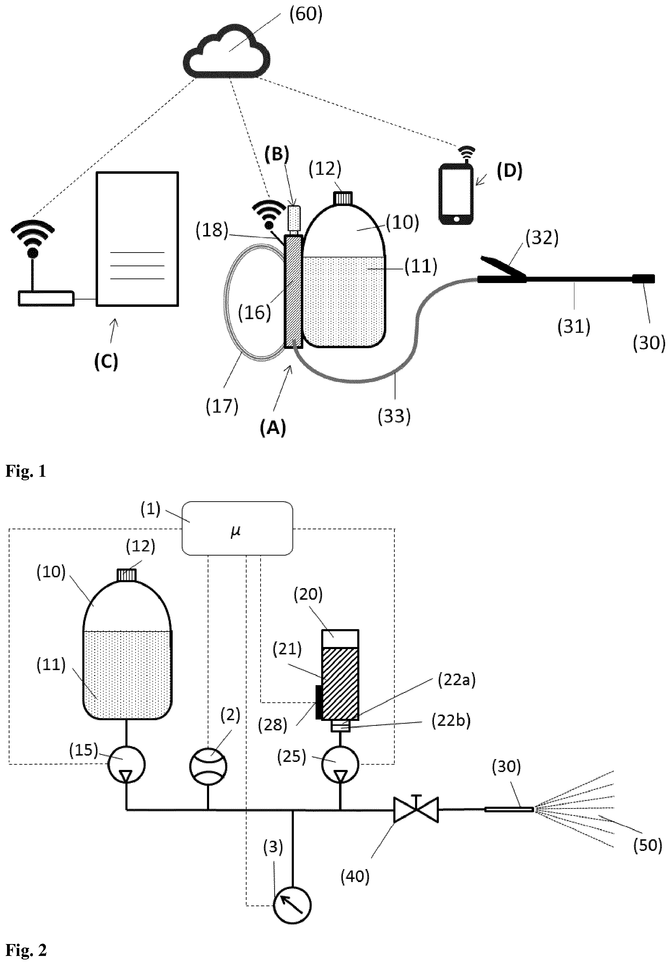

Figur 1 zeigt schematisch eine Ausführungsform des erfindungsgemäßen Systems. Die Ausführungsform umfasst ein Sprühgerät (A), eine auswechselbare Kartusche (B), ein externes Computersystem (C) und ein mobiles Computersystem (D).

Das Sprühgerät (A) umfasst einen Behälter (10), der mit einem Verdünnungsmittel (11) befüllt ist. Der Behälter (10) ist als flexibler Beutel ausgeführt und mit einem wiederverschließbaren Verschluss (12) versehen. Das Sprühgerät (A) umfasst Gurte (17), um das Sprühgerät auf dem Rücken transportieren zu können. Die elektronischen Komponenten (wie z.B. die Kontrolleinheit) und die Fördermittel (wie z.B. Pumpen) sind in einem Gehäuse (16) untergebracht und daher in dieser Figur nicht sichtbar. An das Gehäuse angeschlossen ist die auswechselbare Kartusche (B). In der Kartusche (B) befindet sich ein Konzentrat. Die Zusammenführung des Konzentrats mit dem Verdünnungsmittel erfolgt innerhalb des Gehäuses (16). Das verdünnte Konzentrat verlässt das Gehäuse über einen flexiblen Schlauch (33) in Richtung einer Sprühlanze (31). Die Sprühlanze (31) verfügt über ein manuell betätigbares Ventil (32) und eine Sprühdüse (30). Wird das Ventil (32) geöffnet (der Handgriff betätigt), dann wird das verdünnte Konzentrat über die Sprühdüse verteilt.

In Figur 1 ist eine Antenne (18) an dem Sprühgerät (A) angebracht. Diese Antenne soll symbolisieren, dass das Sprühgerät mit dem externen Computersystem (C) und/oder dem mobilen Computersystem (D) in Verbindung treten kann, um Daten zu transferieren. Der Datentransfer muss aber nicht zwangsläufig kabellos erfolgen. Die Wolke (60) repräsentiert ein Netzwerk, das durch das externe Computersystem (C), das Sprühgerät (A) und/oder das mobile Computersystem (D) gebildet wird.

Das mobile Computersystem (D) ist als so genanntes Smartphone ausgeführt.

Figur 2 zeigt schematisch bevorzugte Ausführungsformen der Komponenten des erfindungsgemäßen Systems. Das System umfasst ein erfindungsgemäßes Sprühgerät und eine erfindungsgemäße Kartusche.

Das erfindungsgemäße Sprühgerät umfasst einen Behälter (10) mit einem Verdünnungsmittel (11), eine Sprühdüse (30), eine erste Pumpe (15) zum Fördern des Verdünnungsmittels (11) aus dem Behälter (10) in Richtung Auslass (30), ein Ventil (40), Mittel (22b) zum Anschließen der auswechselbaren Kartusche (20), eine zweite Pumpe zum Fördern eines in der Kartusche (20) befindlichen Konzentrats (21) aus der Kartusche (20) in Richtung Sprühdüse (30), einen Durchflussmesser (2) zur Messung des Flusses des Verdünnungsmittels (11) aus dem Behälter (10) in Richtung Sprühdüse (30), einen Druckmesser (3) und eine Kontrolleinheit (1).

Der Behälter (10) ist als flexibler Beutel ausgeführt und weist einen wiederverschließbaren Verschluss (12) auf.

Die Mittel (15) zum Fördern des Verdünnungsmittels (11) aus dem Behälter (10) in Richtung Sprühdüse (30) sind in Figur 1 schematisch als Pfeil dargestellt, der lediglich die Flussrichtung angibt. Der Pfeil bedeutet nicht, dass sich die entsprechenden Mittel an dieser Stelle der Zuleitung befinden müssen.

Über die Sprühdüse verlassen das Verdünnungsmittel und das Konzentrat das Sprühgerät in Form einer Mischung (50) mit einem konstanten Mischungsverhältnis.

Die erfindungsgemäße Kartusche (20) beinhaltet das Konzentrat (21). Die Kartusche verfügt über Mittel (22a) zum reversiblen Anschließen der Kartusche (20) an das Sprühgerät. Die erfindungsgemäße Kartusche (20) verfügt ferner über eine Speichereinheit (28).

Die Kontrolleinheit (1) hat Zugriff auf die Speichereinheit (28) (der Zugriff ist dargestellt durch die gestrichelte Linie).

Die Kontrolleinheit (1) steht zudem in Verbindung mit dem Durchflussmesser (2), dem Druckmesser (3), der Pumpe (15) und der Pumpe (25). Wird das Ventil (40) (manuell oder automatisch) geöffnet, wird das Verdünnungsmittel (11) durch die Pumpe (15) aus dem Behälter (10) in Richtung Auslass (30) gefördert. Mittels Durchflussmesser (2) wird der Fluss des Verdünnungsmittels (11) erfasst. Die Kontrolleinheit (1) regelt auf Basis des vom Durchflussmesser (2) gemessenen Flusses die Menge an Konzentrat (21), die mittels Pumpe (25) dem Verdünnungsmittel (11) zugeführt wird, so dass sich das aus der Speichereinheit ausgelesene Mischungsverhältnis einstellt. Zudem stellt die Kontrolleinheit die Flüsse von Verdünnungsmittel (11) und Konzentrat (21) so ein, dass sich der Druck vor der Sprühdüse (gemessen durch den Druckmesser (3) in einem vordefinierten Bereich bewegt, um ein gewünschtes Sprühprofil zu erzeugen.

Ein typischer Ablauf für die Verwendung des in Fig. 1 gezeigten Systems und der in Fig. 2 gezeigten Komponenten sieht wie folgt aus:
Ein Nutzer öffnet den Behälter (10), indem er den wiederverschließbaren Verschluss (12) entfernt. Der Nutzer füllt ein Verdünnungsmittel (11), vorzugsweise Wasser in den Behälter (10) und schließt den Behälter (10) mittels Verschluss (12).

Der Nutzer nimmt eine Kartusche (B, 20) mit einem darin enthaltenen Konzentrat (21). Die Kartusche (B, 20) kann neu sein; es ist aber auch denkbar, dass die Kartusche bereits verwendet worden ist.

Der Nutzer schließt die Kartusche (B, 20) an das Sprühgerät an. Dazu verbindet er die komplementären Verbindungsmittel (22a) und (22b).

Die Kontrolleinheit (1) liest entweder automatisch oder getriggert durch ein Zutun des Nutzers Informationen aus der Speichereinheit (28) der Kartusche (B, 20). Bei diesen Informationen kann es sich um Informationen zum Konzentrat (21), der in der Kartusche enthaltenen (Rest-)Menge an Konzentrat (21) und/oder ein einzustellendes Mischungsverhältnis handeln.

Es ist auch denkbar, dass in der Speichereinheit (28) eine Identifikationsnummer gespeichert ist; die Kontrolleinheit (1) liest diese Identifikationsnummer aus, und ermittelt auf Basis eines internen Registers die Identität der Kartusche (B, 20) und des enthaltenen Konzentrats (21).

In jedem Fall liest die Kontrolleinheit (1) Daten aus der Speichereinheit (28) der Kartusche (B, 20) aus und ist dann in der Lage, ein Mischungsverhältnis für das Verdünnungsmittel (11) und das Konzentrat (21) einzustellen.

Der Nutzer richtet die Sprühdüse (30) auf ein Zielobjekt und öffnet das Ventil (40). Es tritt ein verdünntes Konzentrat über die Sprühdüse (30) aus. Der Nutzer kann das Sprühprofil variieren. Dies geschieht durch Erhöhen oder Absenken des Drucks vor der Sprühdüse (30). Die Variation des Sprühprofils kann entweder direkt über eine entsprechende Eingabevorrichtung am Sprühgerät (A) erfolgen (die mit der Kontrolleinheit kommunizieren kann) oder mittels des mobilen Computersystems (D), das als Fernbedienung fungiert.

Während des Sprühvorgangs wird die Menge an gefördertem Konzentrat ermittelt. Gegebenenfalls wird die Restmenge an Konzentrat in der Kartusche dem Nutzer angezeigt - durch eine entsprechende Anzeigevorrichtung an der Kartusche, am Sprühgerät und/oder an dem mobilen Computersystem. Denkbar ist auch, dass anstelle oder neben der noch vorhandenen Restmenge die Zeitspanne angegeben wird, wie lange die vorhandene Restmenge noch ausreicht, wenn die Sprühbedingungen konstant gehalten werden.

Nachdem der Sprühvorgang beendet worden ist, können Informationen zur Restmenge des Konzentrats in die Speichereinheit der Kartusche zurückgeschrieben werden.

Der Nutzer kann den Abschluss der Sprühaufgabe durch eine Eingabe an der Eingabevorrichtung des Sprühgeräts oder dem mobilen Computersystem (D) dokumentieren. Dabei werden Informationen zum abgeschlossenen Sprühvorgang zusammengefasst. Solche Informationen können sein: Menge an appliziertem Konzentrat, Restmenge an Konzentrat in der Kartusche, Nutzer, verwendete Sprühdüse, verwendeter Sprühdruck, Dauer des Sprühvorgangs, Sprühort, verwendetes Konzentrat und andere.

Diese zusammengefassten Informationen können in einer Speichereinheit des Sprühgeräts, in der Speichereinheit der Kartusche, in einer Speichereinheit des mobilen Computersystems und/oder in einer Speichereinheit des externen Computersystems (C) gespeichert werden.

In jedem Fall werden derartige Informationen entweder unmittelbar nach Abschluss der Sprühaufgabe oder zu einem späteren Zeitpunkt, entweder getriggert durch den Nutzer oder automatisch, an das externe Computersystem (C) übertragen. Die Übertragung erfolgt kabellos oder über eine Anbindung der entsprechenden Komponente, auf der die Informationen gespeichert sind, an das externe Computersystem (C).

Die Informationen liegen dann auf dem externen Computersystem (C) vor und können für verschiedene Zwecke verwendet werden: Bestandskontrolle, Rechnungserstellung, logistische Planungen, Dokumentationen gegenüber Behörden u.v.m.

## Patentansprüche

1. Verfahren zur Applikation eines Wirkstoffs umfassend die folgenden Schritte:
- Bereitstellen einer auswechselbaren Kartusche (B, 20), wobei die Kartusche ein Wirkstoffkonzentrat (21) enthält,
- Bereitstellen eines tragbaren Sprühgeräts (A), das folgende Komponenten umfasst: einen Behälter (10), Mittel (22b) zum Anschließen der Kartusche (B, 20) an das Sprühgerät (A), eine Kontrolleinheit (1) und eine Sprühdüse (30),
- Füllen des Behälters (10) mit einem Verdünnungsmittel (11),
- Anschließen der auswechselbaren Kartusche (B) an das Sprühgerät (A),
- Applizieren des Wirkstoffs auf ein oder mehrere Zielobjekte durch einen Nutzer, wobei die Flüsse des Wirkstoffkonzentrats (21) und des Verdünnungsmittels (11) mittels der Kontrolleinheit (1) so gesteuert werden, dass das Wirkstoffkonzentrat (21) und das Verdünnungsmittel (11) das Sprühgerät (A) als Mischung mit einem gleichbleibenden Mischungsverhältnis über die Sprühdüse (30) verlassen,
**dadurch gekennzeichnet, dass** das Verfahren die weiteren Schritte umfasst:
- Ermitteln der Menge an appliziertem Wirkstoffkonzentrat mittels der Kontrolleinheit (1),
- Ermitteln der Menge des in der Kartusche (B, 20) verbleibenden Wirkstoffkonzentrats (21) mittels der Kontrolleinheit (1),
- Speichern der Menge des in der Kartusche (B, 20) verbleibenden Wirkstoffkonzentrats (21) in einer elektronischen Speichereinheit (28) der Kartusche,
- Übermitteln von Informationen über den applizierten Wirkstoff, und die Menge des applizierten Wirkstoffs an ein externes Computersystem (C).

2. Verfahren nach Anspruch 1, **dadurch gekennzeichnet, dass** die Speichereinheit (28) der Kartusche (B, 20) Teil eines RFID-Tags ist.

3. Verfahren nach einem der Ansprüche 1 oder 2, **dadurch gekennzeichnet, dass** folgende Informationen an das externe Computersystem (C) übermittelt werden:
- Informationen über den Nutzer des Sprühgeräts (A),
- Informationen zum Ort der Applikation und/oder
- Informationen zur Applikationsdauer.

4. Verfahren nach einem der Ansprüche 1 bis 3, ferner umfassend den Schritt
- Überprüfen durch Auslesen der Speichereinheit (28), ob genügend Wirkstoff für einen anstehenden Sprühvorgang vorhanden ist.

5. Verfahren nach einem der Ansprüche 1 bis 4, wobei die Kontrolleinheit (1) die Informationen zunächst an ein mobiles Computersystem (D) überträgt, von wo aus die Informationen zu einem späteren Zeitpunkt auf ein externes Computersystem (C) übertragen werden.

6. Verfahren nach Anspruch 5, wobei das Sprühgerät (A) mit Hilfe des mobilen Computersystem (D) bedient wird.

7. Verfahren nach Anspruch 5 oder 6, wobei das mobile Computersystem (D) ein Smartphone mit einer Software (App) zum Bedienen des Sprühgeräts (A) ist.

8. Verfahren nach einem der Ansprüche 5 bis 7, wobei das mobile Computersystem (D) über Bluetooth mit dem Sprühgerät (A) kommuniziert.

9. System, umfassend
- ein tragbares Sprühgerät (A), das folgende Komponenten umfasst:
- einen Behälter (10) zur Aufnahme eines Verdünnungsmittels (11),
- eine Sprühdüse (30),
- Mittel (15) zur Förderung des Verdünnungsmittels (11) in Richtung Sprühdüse (30),
- Mittel (22b) zum reversiblen Anschließen einer austauschbaren Kartusche (B) enthaltend ein Wirkstoffkonzentrat (21) an das Sprühgerät (A),
- Mittel (25) zur Förderung des Wirkstoffkonzentrats (21) in Richtung Sprühdüse (30), und
- eine Kontrolleinheit (1),
- eine auswechselbare Kartusche (B, 20), die Mittel (22a) zum reversiblen Anschluss der Kartusche (B, 20) an das Sprühgerät (A), und das Wirkstoffkonzentrat (11) umfasst, und
- ein externes Computersystem (C),
**dadurch gekennzeichnet, dass** die Kartusche (B, 20) eine elektronische Speichereinheit (28) umfasst und die Kontrolleinheit (1) konfiguriert ist, die während eines Sprühvorgangs applizierte Menge an Wirkstoffkonzentrat (21) und die nach dem Sprühvorgang in der Kartusche (B, 20) verbliebene Menge an Wirkstoffkonzentrat (21) zu ermitteln und in der elektronischen Speichereinheit (28) zu speichern, und Informationen über einen erfolgten Sprühvorgang an das externe Computersystem (C) zu übermitteln.

10. System nach Anspruch 9, **dadurch gekennzeichnet, dass** in der Speichereinheit (28) der Kartusche (B, 20) Informationen über die in der Kartusche (B, 20) enthaltene Menge oder Restmenge an Konzentrat (21) gespeichert ist.

11. System nach Anspruch 9 oder 10, **dadurch gekennzeichnet, dass** in der Speichereinheit (28) der Kartusche (B, 20) Informationen zu einem Verdünnungsgrad für das Konzentrat (21) gespeichert sind.

12. System nach einem der Ansprüche 9 bis 11, **dadurch gekennzeichnet, dass** die Speichereinheit (28) der Kartusche (B, 20) Teil eines RFID-Tags ist.

13. System nach einem der Ansprüche 9 bis 12, **dadurch gekennzeichnet, dass** das Sprühgerät (A) über ein mobiles Computersystem (D) bedient werden kann.

14. Computerprogrammprodukt umfassend einen Datenträger, auf dem ein Computerprogramm gespeichert ist, das in den Arbeitsspeicher eines Computersystems geladen werden kann und dort das Computersystem dazu veranlasst, folgende Schritte ausführen:
- Empfangen eines Mischungsverhältnisses,
- Ansteuern von Fördermitteln (15) zum Fördern eines Verdünnungsmittels (11) aus einem Behälter (10) in Richtung einer Sprühdüse (30) und zum Fördern eines Wirkstoffkonzentrats (21) aus einer Kartusche (B, 20) in Richtung der Sprühdüse (30),
- Regeln des Flusses des Verdünnungsmittels (11) und/oder des Wirkstoffkonzentrats (21), so dass Verdünnungsmittel (11) und Wirkstoffkonzentrat (21) als Mischung mit dem empfangenen Mischungsverhältnis durch die Sprühdüse (30) treten,
**dadurch gekennzeichnet, dass** das Computerprogramm das Computersystem veranlasst, ferner die folgenden Schritte auszuführen:
- Ermitteln der Menge an Wirkstoffkonzentrat (21), das durch die Sprühdüse (30) befördert wird,
- Ermitteln der Menge an Wirkstoffkonzentrat (21), die in der Kartusche (B, 20) verbleibt,
- Speichern der Menge an Wirkstoffkonzentrat (21), die in der Kartusche (B, 20) verbleibt, in der elektronischen Speichereinheit (28) der Kartusche (B, 20),
- Übermitteln der Menge an appliziertem Wirkstoffkonzentrat an ein externes Computersystem (C).

## Claims

1. Method for applying an active substance comprising the following steps:
- making available a replaceable cartridge (B, 20), wherein the cartridge contains an active substance concentrate (21),
- making available a portable spraying device (A) which comprises the following components: a container (10), means (22b) for connecting the cartridge (B, 20) to the spraying device (A), a control unit (1) and a spraying nozzle (30),
- filling the container (10) with a diluent (11),
- connecting the replaceable cartridge (B) to the spraying device (A),
- application of the active substance to one or more target objects by a user, wherein the flows of the active substance concentrate (21) and of the diluent (11) are controlled, by means of the control unit (1), in such a way that the active substance concentrate (21) and the diluent (11) exit the spraying device (A) as a mixture with a constant mixing ratio via the spraying nozzle (30),
**characterized in that** the method comprises the further steps:
- determining the quantity of applied active substance concentrate by means of the control unit (1),
- determining the quantity of the active substance concentrate (21) remaining in the cartridge (B, 20), by means of the control unit (1),
- storing the quantity of the active substance concentrate (21) remaining in the cartridge (B, 20) in an electronic memory unit (28) of the cartridge,
- transferring information about the applied active substance, and the quantity of the applied active substance, to an external computer system (C) .

2. Method according to Claim 1, **characterized in that** the memory unit (28) of the cartridge (B, 20) is part of an RFID tag.

3. Method according to either of Claims 1 and 2, **characterized in that** the following information is transferred to the external computer system (C):
- information about the user of the spraying device (A),
- information on the location of the application and/or
- information on the duration of the application.

4. Method according to any of Claims 1 to 3, also comprising the step of
- checking, by reading the memory unit (28), whether sufficient active substance is present for a pending spraying process.

5. Method according to one of Claims 1 to 4, wherein the control unit (1) first transmits the information to a mobile computer system (D), from where the information is transmitted to an external computer system (C) at a later time.

6. Method according to Claim 5, wherein the spraying device (A) is operated using the mobile computer system (D) .

7. Method according to Claim 5 or 6, wherein the mobile computer system (D) is a smartphone with software (an app) for operating the spraying device (A).

8. Method according to one of Claims 5 to 7, wherein the mobile computer system (D) communicates with the spraying device (A) via Bluetooth.

9. System comprising
- a portable spraying device (A) which comprises the following components:
- a container (10) for holding a diluent (11),
- a spraying nozzle (30),
- means (15) for feeding the diluent (11) in the direction of the spraying nozzle (30),
- means (22b) for reversibly connecting a replaceable cartridge (B) containing an active substance concentrate (21) to the spraying device (A),
- means (25) for feeding the active substance concentrate (21) in the direction of the spraying nozzle (30), and
- a control unit (1),
- a replaceable cartridge (B, 20) which comprises means (22a) for reversibly connecting the cartridge (B, 20) to the spraying device (A), and the active substance concentrate (11), and
- an external computer system (C),
**characterized in that** the cartridge (B, 20) comprises an electronic memory unit (28) and the control unit (1) is configured to determine the quantity of active substance concentrate (21) applied during a spraying process and the quantity of active substance concentrate (21) remaining in the cartridge (B, 20) after the spraying process and to store it in the electronic memory unit (28), and to transfer information about a spraying process which has taken place to the external computer system (C).

10. System according to Claim 9, **characterized in that** information about the quantity or residual quantity of concentrate (21) contained in the cartridge (B, 20) is stored in the memory unit (28) of the cartridge (B, 20).

11. System according to Claim 9 or 10, **characterized in that** information about a degree of dilution for the concentrate (21) is stored in the memory unit (28) of the cartridge (B, 20).

12. System according to one of Claims 9 to 11, **characterized in that** the memory unit (28) of the cartridge (B, 20) is part of an RFID tag.

13. System according to one of Claims 9 to 12, **characterized in that** the spraying device (A) can be operated by means of a mobile computer system (D).

14. Computer program product comprising a data carrier on which a computer program which can be loaded into the working memory of a computer system is stored, and causes there the computer system to carry out the following steps:
- receiving a mixing ratio,
- actuating feed means (15) to feed a diluent (11) from a container (10) in the direction of a spraying nozzle (30) and to feed an active substance concentrate (21) from a cartridge (B, 20) in the direction of the spraying nozzle (30),
- regulating the flow of the diluent (11) and/or of the active substance concentrate (21) with the result that diluent (11) and active substance concentrate (21) pass as a mixture with the received mixing ratio through the spraying nozzle (30),
**characterized in that** the computer program causes the computer system also to carry out the following steps:
- determining the quantity of active substance concentrate (21) which is fed through the spraying nozzle (30),
- determining the quantity of active substance concentrate (21) which remains in the cartridge (B, 20),
- storing the quantity of active substance concentrate (21) which remains in the cartridge (B, 20) in the electronic memory unit (28) of the cartridge (B, 20),
- transferring the quantity of applied active substance concentrate to an external computer system (C).

## Revendications

1. Procédé d'application d'une substance active, le procédé comprenant les étapes suivantes :
- fournir une cartouche remplaçable (B, 20), la cartouche contenant un concentré de substance active (21),
- fournir un appareil de pulvérisation portable (A) qui comprend les composants suivants : un récipient (10), des moyens (22b) de raccordement de la cartouche (B, 20) à l'appareil de pulvérisation (A), une unité de commande (1) et une buse de pulvérisation (30),
- remplir le récipient (10) avec un diluant (11),
- raccorder la cartouche remplaçable (B) à l'appareil de pulvérisation (A),
- appliquer la substance active à au moins un objet cible par le biais d'un utilisateur, les flux du concentré de substance active (21) et du diluant (11) étant commandés par l'unité de commande (1) de sorte que le concentré de substance active (21) et le diluant (11) quitte l'appareil de pulvérisation (A) par la buse de pulvérisation (30) sous la forme d'un mélange ayant un rapport de mélange constant,
**caractérisé en ce que** le procédé comprend les étapes supplémentaires suivantes :
- déterminer la quantité de concentré de substance active appliqué au moyen de l'unité de commande (1),
- déterminer la quantité du concentré de substance active (21) restant dans la cartouche (B, 20) au moyen de l'unité de commande (1),
- mémoriser la quantité du concentré de substance active (21) restant dans la cartouche (B, 20) dans une unité de mémorisation électronique (28) de la cartouche,
- transmettre des informations sur la substance active appliquée et sur la quantité de substance active appliquée à un système informatique externe (C).

2. Procédé selon la revendication 1, **caractérisé en ce que** l'unité de mémorisation (28) de la cartouche (B, 20) fait partie d'une étiquette RFID.

3. Procédé selon la revendication 1 ou 2, **caractérisé en ce que** les informations suivantes sont transmises au système informatique externe (C) :
- informations sur l'utilisateur de l'appareil de pulvérisation (A),
- informations sur l'emplacement de l'application et/ou
- informations sur la durée d'application.

4. Procédé selon l'une des revendications 1 à 3, comprenant en outre l'étape suivante :
- vérifier par lecture de l'unité de mémorisation (28) s'il y a suffisamment de substance active pour une prochaine opération de pulvérisation.

5. Procédé selon l'une des revendications 1 à 4, l'unité de commande (1) transmettant tout d'abord les informations à un système informatique mobile (D) d'où les informations sont transmises ultérieurement à un système informatique externe (C).

6. Procédé selon la revendication 5, l'appareil de pulvérisation (A) étant mis en œuvre à l'aide du système informatique mobile (D).

7. Procédé selon la revendication 5 ou 6, le système informatique mobile (D) étant un smartphone comportant un logiciel (appli) destiné à mettre en œuvre l'appareil de pulvérisation (A).

8. Procédé selon l'une des revendications 5 à 7, le système informatique mobile (D) communiquant avec l'appareil de pulvérisation (A) via Bluetooth.

9. Système comprenant
- un appareil de pulvérisation portable (A) qui comprend les composants suivants :
- un récipient (10) destiné à recevoir un diluant (11),
- une buse de pulvérisation (30),
- des moyens (15) de transport du diluant (11) en direction de la buse de pulvérisation (30),
- des moyens (22b) de raccordement réversible d'une cartouche remplaçable (B), contenant un concentré de substance active (21), au dispositif de pulvérisation (A),
- des moyens (25) de transport du concentré de substance active (21) en direction de la buse de pulvérisation (30), et
- une unité de commande (1),
- une cartouche remplaçable (B, 20) qui comprend des moyens (22a) de raccordement réversible de la cartouche (B, 20) à l'appareil de pulvérisation (A), et le concentré de substance active (11), et
- un système informatique externe (C),
**caractérisé en ce que** la cartouche (B, 20) comprend une unité de mémorisation électronique (28) et l'unité de commande (1) est configurée pour déterminer la quantité de concentré de substance active (21) qui est appliquée pendant une opération de pulvérisation et la quantité de concentré de substance active (21) qui reste dans la cartouche (B, 20) après l'opération de pulvérisation, les mémoriser dans l'unité de mémorisation électronique (28) et transmettre des informations sur une opération de pulvérisation effectuée au système informatique externe (C).

10. Système selon la revendication 9, **caractérisé en ce que** des informations sur la quantité ou la quantité résiduelle de concentré (21), contenue dans la cartouche (B, 20), sont mémorisées dans l'unité de mémorisation (28) de la cartouche (B, 20).

11. Système selon la revendication 9 ou 10, **caractérisé en ce que** des informations sur un degré de dilution du concentré (21) sont mémorisées dans l'unité de mémorisation (28) de la cartouche (B, 20).

12. Système selon l'une des revendications 9 à 11, **caractérisé en ce que** l'unité de mémorisation (28) de la cartouche (B, 20) fait partie d'une étiquette RFID.

13. Système selon l'une des revendications 9 à 12, **caractérisé en ce que** l'appareil de pulvérisation (A) peut être mis en œuvre par le biais d'un système informatique mobile (D).

14. Progiciel comprenant un support de données sur lequel est mémorisé un logiciel qui peut être chargé dans la mémoire de travail d'un système informatique d'où il ordonne au système informatique d'effectuer les étapes suivantes :
- recevoir un rapport de mélange,
- commander des moyens de transport (15) pour transporter un diluant (11) d'un récipient (10) en direction d'une buse de pulvérisation (30) et pour transporter un concentré de substance active (21) d'une cartouche (B, 20) en direction de la buse de pulvérisation (30),
- réguler le flux du diluant (11) et/ou du concentré de substance active (21) de sorte que le diluant (11) et le concentré de substance active (21) passent à travers la buse de pulvérisation (30) sous la forme d'un mélange ayant le rapport de mélange reçu,
**caractérisé en ce que** le logiciel ordonne au système informatique d'effectuer en outre les étapes suivantes :
- déterminer la quantité de concentré de substance active (21) qui est transporté à travers la buse de pulvérisation (30),
- déterminer la quantité de concentré de substance active (21) qui reste dans la cartouche (B, 20),
- mémoriser la quantité de concentré de substance active (21), qui reste dans la cartouche (B, 20), dans l'unité de mémorisation électronique (28) de la cartouche (B, 20),
- transmettre à un système informatique externe (C) la quantité de concentré de substance active appliqué.
